(19) Europäisches Patentamt
European Patent Office
Office européen des brevets

(11) EP 0 759 051 B1

(12) # EUROPÄISCHE PATENTSCHRIFT

(45) Veröffentlichungstag und Bekanntmachung des Hinweises auf die Patenterteilung:
**13.02.2002 Patentblatt 2002/07**

(21) Anmeldenummer: **95920009.8**

(22) Anmeldetag: **09.05.1995**

(51) Int Cl.[7]: **C08L 101/00**

(86) Internationale Anmeldenummer:
**PCT/EP95/01753**

(87) Internationale Veröffentlichungsnummer:
**WO 95/31501 (23.11.1995 Gazette 1995/50)**

(54) **MEHRPHASIGE POLYMERMISCHUNGEN**

MULTIPHASE POLYMER MIXTURES

MELANGES POLYMERES A PHASES MULTIPLES

(84) Benannte Vertragsstaaten:
**BE CH DE FR GB LI NL**

(30) Priorität: **13.05.1994 DE 4416853**

(43) Veröffentlichungstag der Anmeldung:
**26.02.1997 Patentblatt 1997/09**

(73) Patentinhaber: **BASF AKTIENGESELLSCHAFT
67056 Ludwigshafen (DE)**

(72) Erfinder:
- **GOTTSCHALK, Axel
D-67435 Neustadt (DE)**
- **KOCH, Jürgen
D-67141 Neuhofen (DE)**
- **FISCHER, Michael
D-67227 Frankenthal (DE)**
- **BRAUN, Dietrich
D-64291 Darmstadt (DE)**

(56) Entgegenhaltungen:
**WO-A-94/12572**

- **MACROMOLECULAR SYMPOSIA, Bd. 83, Mai 1994 Seiten 77-91, BRAUN, D. ET AL. 'Influencing the morphology of polymer blends through graft copolymers'**
- **DATABASE WPI Section Ch, Week 8915 Derwent Publications Ltd., London, GB; Class A25, AN 89-109384 & JP,A,01 054 052 ( DENKI KAGAKU KOGYO KK) , 1.März 1989 in der Anmeldung erwähnt**
- **CHEMICAL ABSTRACTS, vol. 113, no. 4, 23.Juli 1990 Columbus, Ohio, US; abstract no. 24863, & KOBUNSHI RONBUNSHU, Bd. 47, Nr. 3, 1990 KOBE, JP, Seiten 215-221, OKAMURA, J. ET AL. 'Mechanical properties of styrene-butadiene block copolymer grafted with methacrylic esters or acrylic esters'**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 759 051 B1

Printed by Jouve, 75001 PARIS (FR)

## Beschreibung

Die vorliegende Erfindung betrifft mehrphasige Polymermischungen laut Anspruch 1.

Weiterhin betrifft die Erfindung die Verwendung dieser Formmassen zur Herstellung von Formkörpern jeglicher Art und die daraus hergestellten Formkörper.

Polymermischungen, auch Polymerblends genannt, dienen im allgemeinen der Verbindung zweier unterschiedlicher Polymerer mit den jeweils wünschenswerten Eigenschaften der Einzelkomponenten, wobei möglichst die unerwünschten Eigenschaften kompensiert werden sollen. Auf diese Weise können mit neuen Blendzusammensetzungen andere Anwendungsgebiete erschlossen werden.

Jedoch zeigen makromolekulare Stoffe eine ausgeprägte Abneigung, sich mit anderen Polymeren zu vermischen, so daß Blendzusammensetzungen meist einen Verträglichkeitsvermittler enthalten.

Viele Probleme bei der Herstellung von Polymerblends aus mehreren, miteinander unverträglichen Polymeren entstehen durch eine unzureichende Phasenanbindung, d.h. Haftung zwischen den einzelnen Polymerphasen. Um eine bessere Phasenanbindung zu erreichen, werden den Mischungspartnern häufig Block- oder Pfropfcopolymere hinzugefügt. Bei den bisher bekannten Polymerblends ist die Phasenanbindung aber noch nicht voll befriedigend. Außerdem beobachtet man bei deren Verarbeitung das Entstehen von Hohlräumen an den Grenzen der einzelnen Polymerphasen, die ihre Ursache in den unterschiedlichen thermischen Ausdehnungskoeffizienten der Polymerphasen haben. Dies beeinträchtigt die mechanische Festigkeit, insbesondere die Zähigkeit und die Spannungsrißbeständigkeit der erhaltenen Polymerblends.

Weiterhin ist es bei der Herstellung von Polymerblends häufig schwierig, verschiedene Polymere in geeigneter Weise miteinander zu vermischen, da einige wichtige Polymere, beispielsweise Polyphenylenether (PPE) mit anderen Polymeren nur schwer verträglich sind. In solchen Fällen verwendet man häufig einen sogenannten Phasenvermittler, der die Mischbarkeit von zwei wenig verträglichen Polymeren verbessern soll.

Aus der JP-A 01/054 052 ist in diesem Zusammenhang u.a. bekannt, ein Copolymer aus Styrol und Acrylnitril und/oder Methacrylat für PPE/ABS Blends zu verwenden. Die dabei erhaltenen Blends weisen aber eine unbefriedigende Zähigkeit sowie eine nicht ausreichende Spannungsrißbeständigkeit und Bindenahtfestigkeit auf.

In der jüngeren Anmeldung WO 93/3291 wurden A-B-C-Blockcopolymere als Haftvermittler vorgeschlagen.

Nach Braun et al., Macromolecular Symposia, Vol. 83, 1994, S. 77-91, eignet sich ein Blockpfropfcopolymer basierend auf einem Styrol/Butadien-Blockcopolymer mit radikalisch aufgepfropften Polycyclohexylmethacrylateinheiten als Kompatibilisierungsmittel für einen Polystyrol/PVC-Blend. Das vorgeschlagene Blockpfropfcopolymer stellt allerdings keinen Verträglichkeitsvermittler für ein breites Spektrum an Blends dar, sondern ist vielmehr nur eine Lösung für das Problem eines Polystyrol/PVC-Blends.

Aufgabe der vorliegenden Erfindung war es daher, mehrphasige Polymermischungen insbesondere aus wenig mischbaren Polymeren zur Verfügung zu stellen, die durch einen Verträglichkeitsvermittler mit möglichst vielen Polymeren gute Blendzusammensetzungen mit einer guten Phasenanbindung und einer guten Zähigkeit ergeben. Diese sollen sich durch eine gute Wärmeformbeständigkeit in Kombination mit einer sehr guten Zähigkeit (insbesondere multiaxialen Schlagzähigkeit) sowie Spannungsrißbeständigkeit und Bindenahtfestigkeit auszeichnen.

Demgemäß wurden die eingangs definierten mehrphasigen Polymermischungen gefunden. Bevorzugte Mischungen dieser Art sowie ihre Verwendung sind den Unteransprüchen zu entnehmen.

Die erfindungsgemäßen Polymermischungen enthalten neben einem Polymeren (A) ein A-B-C-Blockpfropfcopolymer (B), welches aus einem Block A, einem elastischen Block B mit einer Glastemperatur unterhalb von +20°C, insbesondere unterhalb von 0°C, welcher als aufgepfropfte Seitenkette einen Block C, aufgebaut aus Methylmethacrylat, Methylacrylat, 2-Ethylhexylacrylat oder n-Butylacrylat oder deren Mischungen, enthält, wobei die Blöcke jeweils voneinander verschieden sind. Bevorzugte mehrphasige Polymermischungen weisen einen solchen elastischen Block B auf, der aus einem Polymeren eines konjugierten Diens aufgebaut ist. Weiterhin enthalten die erfindungsgemäßen Polymermischungen noch mindestens ein weiteres Polymer (C), welches von (A) und (B) verschieden und mit dem Polymeren (A) unverträglich ist und auf ASA-, ABS- oder SAN-Polymerisate oder Polymere aus $C_1$- bis $C_{18}$-Alkylestern der (Meth)acrylsäure oder Mischungen derartiger Polymere zurückgeht. Dabei ist es auch wesentlich, daß das Polymere (A) mit dem Block A verträglich und dem Block C unverträglichist, das oder die Polymere (C) mit dem Block C verträglich und mit dem Block A unverträglich ist und die Blöcke A, B und C miteinander unverträglich sind. Das Polymere (A) kann mit dem Block A strukturell sowohl identisch als auch verschiedenartig sein, sofern nur die Verträglichkeit gewährleistet ist. Ebenso kann das Polymere (C) mit dem Block C strukturell sowohl identisch als auch verschiedenartig sein, sofern auch hier die Verträglichkeit gegeben ist.

Die Wirkungsweise des A-B-C-Blockpfropfcopolymeren in den erfindungsgemäßen Polymermischungen beruht vor allem darauf, daß bei gleichzeitiger Haftung in den Polymeren (A) und (C) durch die Blöcke A und C eine weiche, elastische Zwischenphase in Gestalt des Blocks B ausgebildet wird. Die Verankerung im Polymer (A) erfolgt dabei durch die Verschlaufung dieses Polymeren mit dem Block A, die Haftung im Polymeren (C) bewirkt die Durchdringung mit dem Block C. Die weiche Zwischenphase (Block B) kann dabei Spannungen zwischen den Phasengrenzflächen aufnehmen und sowohl zur Verbesserung der Mischbarkeit als auch zur Erhöhung der Schlagzähigkeit des Blends beitragen.

Die Frage, ob und unter welchen Bedingungen zwei Polymere mischbar, d.h. verträglich sind, kann häufig nur experimentell ermittelt werden.

Unter der Verträglichkeit zweier Polymerkomponenten versteht man im allgemeinen die Mischbarkeit der Komponenten oder die Neigung des einen Polymeren, sich in der anderen Polymerkomponente zu lösen (siehe B. Vollmert, Grundriß der makromolekularen Chemie, Band IV, S. 222 ff, E. Vollmert-Verlag 1979).

Zwei Polymere sind umso besser verträglich, je geringer die Differenz ihrer Löslichkeitsparameter ist. Derartige Parameter sowie die Mischungsenthalpie sind nicht einheitlich für alle Polymeren bestimmbar, so daß die Löslichkeit nur indirekt, z.B. durch Torsions-Schwingungs- oder DTA-Messungen bestimmbar ist, da bei Copolymeren die für die Einzelkomponenten charakteristischen Stufen entfallen.

Beispiele für miteinander mischbare Polymere finden sich in den Tabellen der einschlägigen Nachschlagewerke wie z.B.: J. Brandrup, E.H. Immergut: Polymer Handbook, 3rd Edition, Wiley & Sons, New York 1989, S. VI/348 bis VI/364; O. Olabisi, L.M. Robeson, M.T. Shaw: Polymer Miscibility, Acadamic Press, New York 1979, S. 215 - 276; L.A. Utracki: Polymer Alloys and Blends, Hanser Verlag, München 1989.

Von einem mischbaren, d.h. verträglichen System aus zwei oder mehreren Polymeren kann zumindest dann ausgegangen werden, wenn dieses zumindest eines der folgenden Kriterien erfüllt:

- optische Klarheit
  Ein Film aus miteinander verträglichen Polymeren erscheint optisch klar, sind diese aber unverträglich, so erscheint der Film optisch trübe. Im Zweifelsfall kann eine elektronenmikroskopische Untersuchung den Grad der Klarheit ermitteln.

- Glastemperatur:
  Miteinander mischbare, d.h. verträgliche Polymere zeigen bei thermischen Belastungen (DTA- oder DSC-Messungen) nur eine Glastemperatur, die zwischen denen der Ausgangspolymeren liegt. Bei teilverträglichen Polymeren können zwei verschiedene Glastemperaturen nachgewiesen werden, die sich aber aufeinander zubewegen.

- Kernspinresonanz- (NMR) -Relaxation:
  Eine sehr empfindliche Methode ist die Bestimmung der Polymermischbarkeit durch NMR-Relaxationszeitmessungen. Im Falle nicht mischbarer Polymere werden die Spin-Spin- bzw. Spin-Gitter-Relaxationszeiten der reinen Polymere gemessen, im Falle mischbarer Polymere treten andere Relaxationszeiten auf.

- sonstige Methoden:
  Andere anwendbare Verfahren, die zur Bestimmung der Mischbarkeit von Polymeren herangezogen werden können, sind Trübungsmessungen, Streumethoden (Lichtstreuung), IR-Spektroskopie und Fluoreszenztechniken (L.A. Utracki "Polymer Alloys and Blends", S. 34 - 42, New York 1989).

Die Herstellung der in den erfindungsgemäßen Polymermischungen enthaltenen A-B-C-Blockpfropfcopolymeren (B) kann nach allgemein bekannten Methoden erfolgen, beispielsweise durch sequentielle anionische Polymerisation (US-A 3 251 905, US-A 3 390 207, US-A 3 598 887, US-A 4 219 627) der Blöcke A und B, wobei der Block C mittels radikalischer Pfropfpolymerisation auf den Block B anschließend erhältlich ist.

Sind nicht alle Monomere in der gewünschten Reihenfolge anionisch polymerisierbar, so kann die Verfahrensweise dahingehend abgeändert werden, daß man nur eines der Monomeren polymerisiert und mit anderen Methoden weiterverfährt, z.B. indem man radikalisch oder aber auch kationisch weiterpolymerisiert. Die Übergangsmöglichkeiten von anionischer Polymerisation auf andere Wachstumsmechanismen sind beispielsweise beschrieben in: P. Rempp, E. Franta, J.E. Herz, Advances in Polymer Science 1988, S. 164 - 168.

Weiterhin können die A-B-C-Blockpfropfcopolymere (B) noch durch radikalische Polymerisation mit Hilfe von funktionellen Initiatoren oder Makroinitiatoren hergestellt werden (G. Riess, G. Hurtrez, P. Bahadur in "Encyclopedia of Polymer Science and Engineering", Vol. 2, 327 - 330, Wiley & Sons [1985]).

Als Polymere (A) enthalten derartige mehrphasige Polymermischungen 10 bis 89, bevorzugt 10 bis 79 und insbesondere 15 bis 50 Gew.-% an Polyphenylenethern.

Die Polyphenylenether weisen im allgemeinen ein Molekulargewicht (Gewichtsmittelwert) im Bereich von 10.000 bis 80.000, vorzugsweise von 20.000 bis 60.000 auf.

Dies entspricht einer reduzierten spezifischen Viskosität (ηred) von 0,2 bis 0,9 dl/g, vorzugsweise von 0,35 bis 0,8 und insbesondere 0,45 bis 0,6, gemessen in einer 0,5 gew.%-igen Lösung in Chloroform bei 25°C nach DIN 53 726.

Geeignete Polyphenylenether sind an sich bekannt und werden vorzugsweise durch oxidative Kupplung von in o-Positionen disubstituierten Phenolen hergestellt.

Als Beispiele für Substituenten sind Halogenatome wie Chlor oder Brom und Alkylreste mit 1 bis 4 Kohlenstoffatomen, die vorzugsweise kein α-ständiges tertiäres Wasserstoffatom aufweisen, z.B. Methyl-, Ethyl-, Propyl- oder Butylreste zu nennen. Die Alkylreste können wiederum durch Halogenatome wie Chlor oder Brom oder durch eine Hydroxylgruppe substituiert sein. Weitere Beispiele möglicher Substituenten sind Alkoxireste, vorzugsweise mit bis zu 4 Kohlenstoffatomen oder gegebenenfalls durch Halogenatome und/ oder Alkylgruppen substituierte Phenylreste. Ebenfalls geeignet sind Copolymere verschiedener Phenole wie z.B. Copolymere von 2,6-Dimethylphenol und 2,3,6-Trimethylphenol. Selbstverständlich können auch Gemische verschiedener Polyphenylenether eingesetzt werden.

Vorzugsweise werden solche Polyphenylenether eingesetzt, die mit vinylaromatischen Polymeren verträglich, d.h. ganz oder weitestgehend in diesen Polymeren löslich sind (vgl. A. Noshay, Block Copolymers, S. 8 bis 10, Academic Press, 1977 und O. Olabisi, Polymer-Polymer Miscibility, 1979, S. 117 bis 189).

Beispiele für Polyphenylenether sind Poly(2,6-dilauryl-1,4-phenylenether), Poly(2,6-diphenyl-1,4-phenylenether), Poly(2,6-dimethoxi-1,4-phenylenether), Poly(2,6-diethoxi-1,4-phenylenether), Poly(2-methoxi-6-ethoxi-1,4-phenylenether), Poly(2-ethoxi-1,4-phenylenether), Poly-(2-chlor-1,4-phenylenether), Poly(2,5-dibrom-1,4-phenylenether). Bevorzugt werden Polyphenylenether eingesetzt,bei denen die Substituenten Alkylreste mit 1 bis 4 Kohlenstoffatomen sind, wie Poly(2,6-dimethyl-1,4-phenylenether), Poly(2-methyl-6-ethyl-1,4-phenylenether), Poly(2-methyl-6-propyl-1,4-phenylenether), Poly(2,6-dipropyl-1,4-phenylenether) und Poly(2-ethyl-6-propyl-1,4-phenylenether).

Weiterhin sind Pfropfpolymere aus Polyphenylenether und vinylaromatischen Polymeren wie Styrol, α-Methylstyrol, Vinyltoluol und Chlorstyrol sowie funktionalisierte oder modifizierte Polyphenylenether wie sie z.B. aus WO-A 86/02086, WO-A 87/00540, EP-A-222 246, EP-A-223 116 und EP-A-254 048 bekannt sind, geeignet.

Der Polyphenylenether in dem Polymer (A) kann bis zu 50 Gew.-%, bevorzugt bis zu 40 Gew.-% durch ein vinylaromatisches Polymer ersetzt werden.

Das vinylaromatische Polymer ist vorzugsweise mit dem eingesetzten Polyphenylenether verträglich.

Das Molekulargewicht dieser an sich bekannten und im Handel erhältlichen Polymeren liegt im allgemeinen im Bereich von 1.500 bis 2.000.000, vorzugsweise im Bereich von 70.000 bis 1.000.000.

Beispiele für bevorzugte, mit Polyphenylenethern verträgliche vinylaromatische Polymere sind der bereits erwähnten Monographie von Olabisi, S. 224 bis 230 und 245 zu entnehmen. Nur stellvertretend seien hier vinylaromatische Polymere aus Styrol, Chlorstyrol, α-Methylstyrol und p-Methylstyrol genannt; in untergeordneten Anteilen (vorzugsweise nicht mehr als 20, insbesondere nicht mehr als 8 Gew.-%), können auch Comonomere wie (Meth) acrylnitril oder (Meth)acrylsäureester am Aufbau beteiligt sein. Besonders bevorzugte vinylaromatische Polymere sind Polystyrol und schlagzäh modifiziertes Polystyrol. Es versteht sich, daß auch Mischungen dieser Polymeren eingesetzt werden können. Die Herstellung erfolgt vorzugsweise nach dem in der EP-A-302 485 beschriebenen Verfahren.

Als Blockcopolymer (B) enthalten die erfindungsgemäßen Polymermischungen 1 bis 40, vorzugsweise 1 bis 20, und insbesondere 5 bis 19 Gew.-% eines A-B-C-Blockpfropfcopolymeren, welches aus einem vinylaromatischen Block A und einem konjugierten Dien als Block B, welcher als aufgepfropfte Seitenkette einen Block C aus Methylmethacrylat, Methylacrylat, 2-Ethylhexylacrylat oder n-Butylacrylat oder deren Mischungen enthält, besteht.

Unter Blockpfropfcopolymeren werden bekanntlich solche Copolymere verstanden, bei denen die unterschiedlichen Monomeren nicht statistisch in der Kette eingebaut sind, sondern in denen homopolymere Kettenabschnitte (Polymerblöcke) der verschiedenen Monomeren miteinander verknüpft sind. Bei Block- oder Pfropfcopolymeren der allgemeinen Formel A-B ist der homopolymere Kettenabschnitt A mit dem homopolymeren Kettenabschnitt B eines anderen Monomeren verbunden.

Entsprechend wird bei Dreiblockpfropfcopolymeren der allgemeinen Formel A-B-C dem homopolymeren Kettenabschnitt B ein homopolymerer Kettenabschnitt C eines anderen Monomeren aufgepfropft.

Die A-B-C-Blockpfropfcopolymeren B) zeichnen sich dadurch aus, daß der Block A mit dem Polyphenylenether A) oder dem Styrolhomo- oder copolymerisat (A) verträglich ist und der Block C mit der weiteren Polymerkomponente C) verträglich ist. Unter der Verträglichkeit zweier Polymerkomponenten versteht man im allgemeinen die Mischbarkeit der Komponenten oder die Neigung des einen Polymeren, sich in der anderen Polymerkomponente zu lösen (siehe B. Vollmert, Grundriß der makromolekularen Chemie, Band IV, S. 222 ff, E. Vollmert-Verlag 1979).

Die in den erfindungsgemäßen Polymermischungen enthaltenen A-B-C-Blockpfropfcopolymere (B) weisen eine Glasübergangstemperatur der Blöcke A und C von größer 0°C, bevorzugt größer 80°C auf. Der Block B hat eine Glasübergangstemperatur von kleiner 20°C, bevorzugt von kleiner 0°C und insbesondere von kleiner -30°C.

Die Gewichtsverhältnisse der Blöcke, bezogen auf das Blockpfropfcopolymerisat (B), betragen:

10 bis 85, vorzugsweise 15 bis 80 und insbesondere 30 bis 60 Gew.-% des Blockes A,

5 bis 80, vorzugsweise 5 bis 60 und insbesondere 5 bis 40 Gew.-% des elastischen Blockes B

10 bis 85, vorzugsweise 15 bis 80 und insbesondere 25 bis 60 Gew.-% des Blockes C.

Im folgenden werden die einzelnen Aufbaukomponenten der A-B-C-Blockpfropfcopolymeren beschrieben:

Der Block A besteht aus einem vinylaromatischen Polymeren.

Beispiele für bevorzugte, mit Polyphenylenethern verträgliche vinylaromatische Polymere sind der Monographie von O. Olabisi, Polymer-Polymer Miscibility, 1979, S. 224 bis 230 und 245 zu entnehmen.

Es kommen sowohl Homo- als auch Copolymerisate von vinylaromatischen Monomeren mit 8 bis 12 C-Atomen in Betracht.

Als monovinylaromatische Verbindungen kommen dabei insbesondere Styrol in Betracht, ferner die kern- oder seitenkettenalkylierten Styrole. Als Beispiele seien Chlorstyrol, α-Methylstyrol, Styrol, p-Methylstyrol, Vinyltoluol und p-tert.-Butylstyrol genannt. Vorzugsweise wird jedoch Styrol allein verwendet.

Die Homopolymerisate werden im allgemeinen nach den bekannten Verfahren in Masse, Lösung oder Suspension hergestellt (vgl. Ullmanns Enzyklopädie der techn. Chemie, Band 19, Seiten 265 bis 272, Verlag Chemie, Weinheim 1980). Die Homopolymerisate können Gewichtsmittel des Molekulargewichts $M_w$ von 1500 bis 2.000.000, vorzugsweise von 50.000 bis 1.000.000 aufweisen, die nach üblichen Methoden bestimmt werden können.

Als Comonomere zur Herstellung von Copolymerisaten kommen z.B. (Meth)acrylsäure, (Meth)acrylsäurealkylester mit 1 bis 4 C-Atomen im Alkylrest, Acrylnitril und Maleinsäureanhydrid sowie Maleinsäureimide, Acrylamid und Methacrylamide sowie N,N- oder N-alkyl-substituierten Derivate mit 1 bis 10 C-Atomen im Alkylrest in Frage.

Die Comonomeren sind je nach ihrer chemischen Struktur in unterschiedlichen Mengen in den Styrolpolymerisaten enthalten. Entscheidend für den Gehalt an Comonomeren in der Polymermischung ist die Mischbarkeit des Copolymerisates mit dem Polyphenylenether. Solche Mischungsgrenzen sind bekannt und beispielsweise in der US-A 4 360 618, der US-A 4 405 753 und in der Veröffentlichung von J.R. Fried, G.A. Hanna, Polymer Eng. Sci. Band 22 (1982) Seite 705 ff beschrieben. Die Herstellung der Copolymeren erfolgt nach bekannten Verfahren, die beispielsweise in Ullmanns Enzyklopädie der techn. Chemie, Band 19, Seite 273 ff, Verlag Chemie, Weinheim (1980) beschrieben sind. Die Copolymerisate haben im allgemeinen Gewichtsmittel des Molekulargewichtes ($M_w$) von 10.000 bis 500.000, vorzugsweise von 70.000 bis 300.000, die nach üblichen Methoden bestimmt werden können.

Der Block B besteht aus einem Polymeren eines konjugierten Diens mit 4 bis 16 C-Atomen, bevorzugt 4 bis 8 C-Atomen.

Als Beispiele seien 1,3-Pentadien, alkylsubstituierte Diene wie 2,3-Dimethylbutadien oder konjugierte Hexadiene, Heptadiene sowie Octadiene und cyclische Diene wie Cyclopentadien genannt, wobei Butadien und Isopren bevorzugt sind. Es können auch Mischungen der konjugierten Diene zum Aufbau des Blockes B verwendet werden, wobei das Mischungsverhältnis beliebig ist.

Das mittlere Molekulargewicht des Blockes B ist in weiten Bereichen unkritisch. Es hat sich jedoch als vorteilhaft herausgestellt, wenn B ein ungefähr gleiches oder niedrigeres Molekulargewicht wie der Block A oder C aufweist. Das mittlere Molekulargewicht des Polymerblockes B ist beispielsweise durch Differenzbildung der Molekulargewichte von A und C zum mittleren Molekulargewicht des A-B-C-Blockpfropfcopolymeren erhältlich.

Ferner hat es sich als vorteilhaft erwiesen, wenn die Blöcke A oder C ungefähr die gleiche oder eine größere Blocklänge aufweisen wie die Polymere (A) oder (C), mit denen die jeweiligen Blöcke verträglich sind.

Als Monomere, welche den Block C des Blockpfropfcopolymeren bilden, kommen Methylmethacrylat, Methylacrylat, 2-Ethylhexylacrylat oder n-Butylacrylat oder deren Mischungen in Frage.

Die Verwendung von hydroxy-, epoxy- und aminofunktionellen Methacrylaten und Acrylaten ist ebenfalls möglich. Hierbei ist es vorteilhaft, die funktionellen Gruppen durch z.B. Trialkylsilylgruppen vor der Polymerisation zu schützen. Derartige Polymerisationsverfahren in Anwesenheit von Schutzgruppen sind bei S. Nakahama et al, Prog. Polym. Sci. Vol. 15, 299-335, 1990 beschrieben.

Als weitere Comonomere kann man bis zu 50 Gew.-%, bevorzugt von 1 bis 20 Gew.-%, der folgenden beispielhaft aufgeführten Monomeren einsetzen:

- Vinylaromaten wie Styrol, alpha-Methylstyrol, Vinyltoluol oder p-tert.-Butylstyrol;
- p-Aminostyrol;
- p-Hydroxystyrol;
- p-Vinylbenzoesäure
- Acryl- und Methacrylsäure;
- Acryl- und Methacrylamid;
- Maleinsäure sowie deren Imide und $C_1$-$C_{10}$-Alkylester;
- Fumarsäure sowie deren Imide und $C_1$-$C_{10}$-Alkylester;
- Itakonsäure sowie deren Imide und $C_1$-$C_{10}$-Alkylester;
- Acryl- und Methacrylnitril;
- Hydroxyalkyl(meth)acrylate.

Die Herstellung der als A-B-Pfropfgrundlage dienenden Blockcopolymeren kann nach bekannten Methoden der anionischen Blockcopolymerisation durch sequentielle Addition der Monomeren oder Kopplungstechniken erfolgen. Derartige Verfahren werden z.B. in den US-Patentschriften 3 251 905, 3 390 207, 3 598 887 und 4 219 627 ausführlich beschrieben. Als Initiatoren für die Polymerisation eignen sich alkalimetallorganische Verbindungen, vorzugsweise Lithiumalkyle wie z.B. Methyllithium, Ethyllithium, n- oder s-Butyllithium oder Isopropyllithium. Besonders bevorzugt wird n- oder s-Butyllithium eingesetzt. Als Lösungsmittel für die Polymerisation eignen sich zweckmäßig geradkettige oder verzweigte aliphatische Kohlenwasserstoffe, wie z.B. n-Octan oder n-Hexan, sowie einfache oder substituierte cycloaliphatische und aromatische Kohlenwasserstoffe wie z.B. Cyclohexan, Methylcyclohexan oder Toluol, Benzol sowie jede beliebige Mischung der aliphatischen, cycloaliphatischen und aromatischen Kohlenwasserstoffe. Vorteilhaft wird Cyclohexan als Lösungsmittel verwendet.

Als Lösungsmittelkomponenten sind ferner Ether wie Tetrahydrofuran oder Diethylether sowie tertiäre Amine wie z.B. Tetramethylethylendiamin oder Pyridin in Konzentrationen von 0,01 bis 20, vorzugsweise 0,01 bis 2 Gew.-% geeignet. Bevorzugt ist Tetrahydrofuran.

Alle Einsatzstoffe müssen von sauerstoff- und protonenaktiven Verunreinigungen befreit werden, was z.B. durch Kontaktieren mit Metallorganylen oder durch adsorptive Reinigung, z.B. Calciumhydrid erfolgen kann. Die Durchführung der Polymerisation erfolgt unter Inertgasbedingungen bei Temperaturen von -100 bis +120°C, vorzugsweise bei -80 bis 80°C. Es wird bei Drücken gearbeitet, bei denen die Monomeren und Lösungsmittel bei der Polymerisationstemperatur nicht verdampfen. Nach beendeter Polymerisation wird das Polymerisationsgemisch mit einer ausreichenden Menge Wasser, Methanol oder Isopropanol versetzt, um die aktiven Endgruppen bzw. überschüssigen Initiator zu desaktivieren.

Im allgemeinen wird so vorgegangen, daß in einer ersten Polymerisationsstufe der vinylaromatische Kohlenwasserstoff zur Bildung des A-Blocks vollständig auspolymerisiert wird, im zweiten Polymerisationsschritt der Dienkohlenwasserstoff zur Bildung des B-Blocks vollständig umgesetzt wird. Dabei entstehen scharfe Übergänge zwischen den einzelnen Blöcken.

Die Einführung des Blockes C als Seitenkette erfolgt bevorzugt durch radikalische Polymerisation des/der entsprechenden Monomeren in Gegenwart des AB-Blockcopolymeren.

Die so erhaltenen Blockpfropfcopolymeren (B) können nach üblichen Verfahren durch Hydrierbehandlung in Polymere übergeführt werden, in denen die aliphatischen ungesättigten Bindungen teilweise abgesättigt sind, d.h. die einen Hydrierungsgrad von 50 bis 100 Gew.-% aufweisen, bevorzugt 70 bis 100 und insbesondere 90 bis 100 Gew.-%.

Die Hydrierung wird vorzugsweise mit molekularem Wasserstoff und Katalysatoren auf Basis von Metallen oder Metallsalzen der achten Gruppe des Periodensystems durchgeführt. Sie kann in heterogener Phase z.B. mit Raney-Nickel oder bevorzugt in homogener Phase mit Katalysatoren auf Basis von Salzen, insbesondere Carboxylaten, Alkoxiden oder Enolaten des Kobalts, Nickels oder Eisens, die mit Metallalkylen, insbesondere mit Aluminiumalkylen, kombiniert sind oder homogen durch in situ erzeugte Diimine aus z.B. Tosylhydrazid erfolgen. Verfahren zur selektiven Hydrierung von Blockpfropfcopolymeren werden u.a. in den US-Patentschriften 3 113 986 und 4 226 952 beschrieben.

Das Polymerisationsgemisch kann zur Isolierung des Polymeren nach bekannten Verfahren wahlweise direkt zur Trockne erhitzt oder mit Wasserdampf behandelt werden, wobei das Lösungsmittel abdestilliert wird. Es kann gleichfalls in einem Überschuß Nichtlösungsmittel wie z.B. Ethanol gefällt und mechanisch abgetrennt und getrocknet oder durch Extruderentgasung aufgearbeitet werden.

Der Restdoppelbindungsgehalt der olefinisch ungesättigten Bindungen wird durch Fourier-Analyse der Infrarotspektren oder durch iodometrische Titration nach Wijs sowie durch $^1$H-NMR-Spektroskopie ermittelt.

Das Gewichtsverhältnis der Monomeren im Blockpfropfcopolymeren (B) kann nach üblichen Methoden bestimmt werden, z.B. durch oxidativen Abbau der unhydrierten Blockpfropfcopolymeren mit Osmiumtetroxid und gravimetrischer Analyse, IR-spektroskopisch oder über eine Bestimmung des Brechungsindex.

Das mittlere Molekulargewicht des Blockpfropfcopolymeren (B), worunter im Rahmen dieser Erfindung das Zahlenmittel des Molekulargewichtes verstanden wird, soll größer 10.000, bevorzugt größer 50.000, insbesondere größer als 100.000 sein. Es wird, wie unten beschrieben, durch Gelpermeationschromatographie bestimmt.

Bei der Charakterisierung der Blockpfropfcopolymeren (B) werden die folgenden Methoden verwendet:

Die mittleren Molekulargewichte M und Molekulargewichtsverteilungen (Zahlenmittel $M_n$, Gewichtsmittel $M_w$, U (Uneinheitlichkeit) = $M_w/M_n$-1) werden durch Gelpermeationschromatographie anhand von Eichkurven für Polystyrol (Eichsubstanzen mit sehr enger Molekulargewichtsverteilung: $M_w/M_n$ ca. 1) bei 23°C in 0,125 gew.-%iger Tetrahydrofuranlösung bei einer Durchflußgeschwindigkeit von 1,5 ml/min [vgl. G. Glöckner, "Polymercharakterisierung durch Flüssigkeitschromatographie", Verlag A. Hütig, Heidelberg, 1982] gemessen.

Die chemische Zusammensetzung und Mikrostruktur des elastomeren Mittelblockes B (1,2 bzw. 1,4 Verknüpfung oder cis/trans Anteile des Diens im Block) wird üblicherweise durch $^1$H-NMR-Spektroskopie bestimmt. Die Glasübergangstemperaturen werden anhand dynamisch mechanischer Analyse (Meßfrequenz: 1 rad/s) ermittelt.

Als Polymer (C) enthalten die erfindungsgemäßen Polymermischungen 10 bis 89, vorzugsweise 20 bis 80

und insbesondere 40 bis 80 Gew.-%, bezogen auf das Gesamtgewicht der Polymere (A) bis (C), mindestens ein weiteres Polymer (C), welches von (A) und (B) verschieden ist.

Das Polymer (C) ist mit dem Polymer (A) nicht verträglich.

Beispiele für derartige Polymere (C) sind ASA- oder ABS- oder SAN-Polymerisate oder Polymere aus $C_1$ bis $C_{18}$ Alkylestern der (Meth)acrylsäure oder Mischungen derartiger Polymere.

Das Mischungsverhältnis der Polymeren ist über weite Grenzen varriierbar; für den Fall der Mischung von (Meth)acrylaten mit ASA, ABS oder SAN ist jedoch zu beachten, daß diese nur bis zu einem Acrylnitrilgehalt bis zu 27 Gew.-% (bis 250°C), bis zu 25 Gew.-% (bis 300°C), bezogen auf den Gesamtgehalt an z.B. ABS, mischbar sind.

Bevorzugte ASA-Polymerisate sind aufgebaut aus einer Weich- oder Kautschukphase aus einem Pfropfpolymerisat aus:

$C_1$ 50 bis 90 Gew.-% einer Pfropfgrundlage auf Basis von

- $C_{11}$ 95 bis 99,9 Gew.-% eines $C_2$-$C_{10}$-Alkylacrylats und
- $C_{12}$ 0,1 bis 5 Gew.-% eines difunktionellen Monomeren mit zwei olefinischen, nicht konjugierten Doppelbindungen, und

$C_2$ 10 bis 50 Gew.-% einer Pfropfhülle aus

- $C_{21}$ 20 bis 90 Gew.-% Styrol oder substituierten Styrolen der allgemeinen Formel I oder deren Mischungen, und
- $C_{22}$ 10 bis 80 Gew.-% Acrylnitril, Methacrylnitril, Acrylsäureestern oder Methacrylsäureestern oder deren Mischungen,

in Mischung mit einer Hartmatrix auf Basis eines SAN-Copolymeren $C_3$) aus:

$C_{31}$ 50 bis 90, vorzugsweise 55 bis 90 und insbesondere 65 bis 85 Gew.-% Styrol und/oder substituierten Styrolen der allgemeinen Formel I und

$C_{32}$ 10 bis 50, vorzugsweise 10 bis 45 und insbesondere 15 bis 35 Gew.-% Acrylnitril und/oder Methacrylnitril.

Bei der Komponente $C_1$) handelt es sich um ein Elastomeres, welches eine Glasübergangstemperatur von unter -20, insbesondere unter -30°C aufweist.

Für die Herstellung des Elastomeren werden als Hauptmonomere $C_{11}$) Ester der Acrylsäure mit 2 bis 10 C-Atomen, insbesondere 4 bis 8 C-Atomen eingesetzt. Als besonders bevorzugte Monomere seien hier tert.-, iso- und n-Butylacrylat sowie 2-Ethylhexylacrylat genannt, von denen die beiden letztgenannten besonders bevorzugt werden.

Neben diesen Estern der Acrylsäure werden 0,1 bis 5, insbesondere 1 bis 4 Gew.-%, bezogen auf das Gesamtgewicht $C_{11}$ + $C_{12}$ eines polyfunktionellen Monomeren mit mindestens zwei olefinischen, nicht konjugierten Doppelbindungen eingesetzt. Von diesen werden difunktionelle Verbindungen, d.h. mit zwei nicht konjugierten Doppelbindungen bevorzugt verwendet. Beispielsweise seien hier Divinylbenzol, Diallylfumarat, Diallylphthalat, Triallylcyanurat, Triallylisocyanurat, Tricyclodecenylacrylat und Dihydrodicyclopentadienylacrylat genannt, von denen die beiden letzten besonders bevorzugt werden.

Verfahren zur Herstellung der Pfropfgrundlage $C_1$ sind an sich bekannt und z.B. in der DE-B 1 260 135 beschrieben. Entsprechende Produkte sind auch kommerziell im Handel erhältlich.

Als besonders vorteilhaft hat sich in einigen Fällen die Herstellung durch Emulsionspolymerisation erwiesen.

Die genauen Polymerisationsbedingungen, insbesondere Art, Dosierung und Menge des Emulgators werden vorzugsweise so gewählt, daß der Latex des Acrylsäureesters, der zumindest teilweise vernetzt ist, eine mittlere Teilchengröße (Gewichtsmittel $d_{50}$) im Bereich von etwa 200 bis 700, insbesondere von 250 bis 600 nm aufweist. Vorzugsweise hat der Latex eine enge Teilchengrößenverteilung, d.h. der Quotient

$$Q = \frac{d_{90} - d_{10}}{d_{50}}$$

ist vorzugsweise kleiner als 0,5, insbesondere kleiner als 0,35.

Der Anteil der Pfropfgrundlage $C_1$ am Pfropfpolymerisat $C_1$+$C_2$ beträgt 50 bis 90, vorzugsweise 55 bis 85

und insbesondere 60 bis 80 Gew.-%, bezogen auf das Gesamtgewicht von $C_1$+$C_2$.

Auf die Pfropfgrundlage $C_1$ ist eine Pfropfhülle $C_2$ aufgepfropft, die durch Copolymerisation von

$C_{21}$ 20 bis 90, vorzugsweise 30 bis 90 und insbesondere 30 bis 80 Gew.-% Styrol oder substituierten Styrolen der allgemeinen Formel I

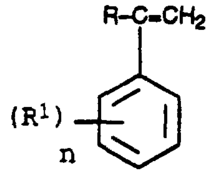

wobei R Alkylreste mit 1 bis 8 C-Atomen, Wasserstoffatome oder Halogenatome und $R^1$ Alkylreste mit 1 bis 8 C-Atomen oder Halogenatome darstellen und n den Wert 0, 1, 2 oder 3 hat, und

$C_{22}$ 10 bis 80, vorzugsweise 10 bis 70 und insbesondere 20 bis 70 gew.-% Acrylnitril, Methacrylnitril, Acrylsäureestern oder Methacrylsäureestern oder deren Mischungen erhältlich ist.

Beispiele für substituierte Styrole sind α-Methylstyrol, p-Methylstyrol, p-Chlorstyrol und p-Chlor-α-Methylstyrol, wovon Styrol und α-Methylstyrol bevorzugt werden.

Bevorzugte Acryl- bzw. Methacrylsäureester sind solche, deren Homopolymere bzw. Copolymerisate mit den anderen Monomeren der Komponente $C_{22}$) Glasübergangstemperaturen von mehr als 20°C aufweisen; prinzipiell können jedoch auch andere Acrylsäureester eingesetzt werden, vorzugsweise in solchen Mengen, so daß sich insgesamt für die Komponente $C_2$ eine Glasübergangstemperatur Tg oberhalb 20°C ergibt.

Besonders bevorzugt werden Ester der Acryl- oder Methacrylsäure mit $C_1$-$C_8$-Alkoholen und Epoxygruppen enthaltende Ester wie Glycidylacrylat bzw. Glycidylmethacrylat. Als ganz besonders bevorzugte Beispiele seien Methylmethacrylat, t-Butylmethacrylat, Glycidylmethacrylat und n-Butylacrylat genannt, wobei letzterer aufgrund seiner Eigenschaft, Polymerisate mit sehr niedriger Tg zu bilden, vorzugsweise in nicht zu hohem Anteil eingesetzt wird.

Die Pfropfhülle $C_2$) kann in einem oder in mehreren, z.B. zwei oder drei, Verfahrensschritten hergestellt werden, die Bruttozusammensetzung bleibt davon unberührt.

Vorzugsweise wird die Pfropfhülle in Emulsion hergestellt, wie dies z.B. in der DE-PS 12 60 135, DE-OS 32 27 555, DE-OS 31 49 357 und DE-OS 34 14 118 beschrieben ist.

Je nach den gewählten Bedingungen entsteht bei der Pfropfmischpolymerisation ein bestimmter Anteil an freien Copolymerisaten von Styrol bzw. substituierten Styrolderivaten und (Meth)Acrylnitril bzw. (Meth)Acrylsäureestern.

Das Pfropfmischpolymerisat $C_1$ + $C_2$ weist im allgemeinen eine mittlere Teilchengröße von 100 bis 1.000 nm, im besonderen von 200 bis 700 nm, ($d_{50}$-Gewichtsmittelwert) auf. Die Bedingungen bei der Herstellung des Elastomeren $C_1$) und bei der Pfropfung werden daher vorzugsweise so gewählt, daß Teilchengrößen in diesem Bereich resultieren. Maßnahmen hierzu sind bekannt und z.B. in der DE-PS 1 260 135 und der DE-OS 28 26 925 sowie in Journal of Applied Polymer Science, Vol. 9 (1965), S. 2929 bis 2938 beschrieben. Die Teilchenvergrößerung des Latex des Elastomeren kann z.B. mittels Agglomeration bewerkstelligt werden.

Zum Pfropfpolymerisat ($C_1$+$C_2$) zählen im Rahmen dieser Erfindung auch die bei der Pfropfmischpolymerisation zur Herstellung der Komponente $C_2$) entstehenden freien, nicht gepfropften Homo- und Copolymerisate.

Nachstehend seien einige bevorzugte Pfropfpolymerisate angeführt:

1: 60 Gew.-% Pfropfgrundlage $C_1$ aus
$C_{11}$ 98 Gew.-% n-Butylacrylat und
$C_{12}$ 2 Gew.-% Dihydrodicyclopentadienylacrylat und
40 Gew.-% Pfropfhülle $C_2$ aus
$C_{21}$ 75 Gew.-% Styrol und
$C_{22}$ 25 Gew.-% Acrylnitril

2: Pfropfgrundlage wie bei 1 mit 5 Gew.-% einer ersten Pfropfhülle aus Styrol
und
35 Gew.-% einer zweiten Pfropfstufe aus
$C_{21}$ 75 Gew.-% Styrol und

$C_{22}$ 25 Gew.-% Acrylnitril

3: Pfropfgrundlage wie bei 1 mit 13 Gew.-% einer ersten Pfropfstufe aus Styrol und 27 Gew.-% einer zweiten Pfropfstufe aus Styrol und Acrylnitril im Gewichtsverhaltnis 3:1

Die als Komponente $C_3$) enthaltenen Produkte können z.B. nach dem in den DE-AS 10 01 001 und DE-AS 10 03 436 beschriebenen Verfahren hergestellt werden. Auch im Handel sind solche Copolymere erhältlich. Vorzugsweise liegt der durch Lichtstreuung bestimmte Gewichtsmittelwert des Molekulargewichts im Bereich von 50.000 bis 500.000, insbesondere von 100.000 bis 250.000.

Das Gewichtsverhältnis von ($C_1$ + $C_2$):$C_3$ liegt im Bereich von 1:2,5 bis 2,5:1, vorzugsweise von 1:2 bis 2:1 und insbesondere von 1:1,5 bis 1,5:1.

Geeignete SAN-Polymere als Komponente C) sind vorstehend (siehe $C_{31}$ und $C_{32}$) beschrieben.

Die Viskositätszahl der SAN-Polymerisate, gemessen gemäß DIN 53 727 als 0,5 gew.-%ige Lösung in Dimethylformamid bei 23°C liegt im allgemeinen im Bereich von 40 bis 100, vorzugsweise 50 bis 80 ml/g.

ABS-Polymere als Polymer (C) in den erfindungsgemäßen mehrphasigen Polymermischungen weisen den gleichen Aufbau wie vorstehend für ASA-Polymere beschrieben auf. Anstelle des Acrylatkautschukes $C_1$) der Pfropfgrundlage beim ASA-Polymer werden üblicherweise konjugierte Diene, wie vorstehend beim Aufbau des Blockes B des ABC Copolymerisates beschrieben; eingesetzt, so daß sich für die Pfropfgrundlage $C_4$ vorzugsweise folgende Zusammensetzung ergibt:

$C_{41}$ 70 bis 100 Gew.-% eines konjugierten Diens und

$C_{42}$ 0 bis 30 Gew.-% eines difunktionellen Monomeren mit zwei olefinischen nicht-konjugierten Doppelbindungen

Pfropfauflage $C_2$ und die Hartmatrix des SAN-Copolymeren $C_3$) bleiben in der Zusammensetzung unverändert. Derartige Produkte sind im Handel erhältlich. Die Herstellverfahren sind dem Fachmann bekannt, so daß sich weitere Angaben hierzu erübrigen.

Das Gewichtsverhältnis von ($C_4$ + $C_2$):$C_3$ liegt im Bereich von 3:1 bis 1:3, vorzugsweise von 2:1 bis 1:2.

Als Polymer (C) in den erfindungsgemäßen mehrphasigen Polymermischungen kommt weiterhin ein Polymer aus einem $C_1$-$C_{18}$ Alkylester der (Meth)acrylsäure oder deren Mischungen in Betracht, wie sie vorstehend beim Aufbau des Blockes C des A-B-C Blockpfropfcopolymeren bereits beschrieben wurden.

Weiterhin können die erfindungsgemäßen Polymermischungen auch übliche Zusatzstoffe und Verarbeitungshilfsmittel enthalten. Der Anteil dieser Zusätze beträgt im allgemeinen nicht mehr als 60, insbesondere nicht mehr als 50 und ganz besonders nicht mehr als 30 Gew.-%, bezogen auf das Gesamtgewicht aus den Polymeren (A) bis (C) und diesen Zusatzstoffen und Hilfsmitteln.

Als Zusatzstoffe seien genannt Hitze- und Lichtstabilisatoren, Gleit- und Entformungsmittel, Färbemittel, wie Farbstoffe und Pigmente in üblichen Mengen. Weitere Zusatzstoffe sind Verstärkungsmittel wie Glasfasern, Kohlenstoff-Fasern, aromatische Polyamidfasern und/oder Füllstoffe, Gipsfasern, synthetische Calciumsilikate, Kaolin, calciniertes Kaolin, Wollastonit, Talkum und Kreide.

Auch niedermolekulare oder hochmolekulare Polymere kommen als Zusatzstoffe in Betracht, wobei Polyethylenwachs als Gleitmittel besonders bevorzugt ist.

Als Pigmente kommen z. B. in Frage $TiO_2$ und Ruße.

Bei Verwendung von $TiO_2$ liegt die mittlere Teilchengröße im Bereich von 50 - 400 nm, insbesondere 150 - 240 nm. Techn. Verwendung finden Rutile und Anatas, die gegebenenfalls mit Metalloxiden, z. B. Al-oxid, Si-Oxiden, Oxiden des Zn oder Siloxanen beschichtet sind.

Als Ruße sollen mikrokristalline, feinteilige Kohlenstoffe verstanden werden (vgl. Kunststofflexikon, 7. Auflage 1980).

Als geeignet seien die Ofenruße, Acetylenruße, Gasruße sowie die durch thermische Herstellung erhältlichen Thermalruße genannt.

Die Teilchengrößen liegen vorzugsweise im Bereich von 0,01 bis 0,1 μm und die Oberflächen im Bereich von $10^2$ bis $10^4$ $m^2/g$ (BET/ASTM D 3037) bei DBP-Absorptionen von $10^2$ bis $10^3$ ml/100 g (ASTM d 2414).

Als zusätzliche Flammschutzmittel können insbesondere phosphorhaltige Verbindungen in Mengen bis zu 20 Gew.-%, bevorzugt bis zu 10 Gew.-%, eingesetzt werden. Beispiele hierfür sind Phosphorsäureester, Phosphinsäureester, Phosphinoxide, Phosphor und org. Phosphate, die in Kombination mit einem Triazinderivat oder Polytetrafluorethylen eingesetzt werden können.

Über Art und Menge dieser Zusatzstoffe lassen sich die gewünschten Eigenschaften der Endprodukte in weitem Maße steuern.

Die Herstellung der erfindungsgemäßen mehrphasigen Polymermischungen erfolgt zweckmäßigerweise durch Mischen der Polymere (A), (B) und (C) bei Temperaturen im Bereich von 200 bis 320°C in üblichen Mischvorrichtungen, wie z. B. Knetern, Banburymischern und Einschneckenextrudern, vorzugsweise mit einem Zweischnekkenextruder. Um eine möglichst homogene Formmasse zu erhalten, ist eine intensive Durchmischung notwendig. Die Reihenfolge des Mischens der Polymere kann variiert werden, es können zwei oder gegebenenfalls drei Polymere vorgemischt sein oder es können auch alle Polymere gemeinsam gemischt werden. Die Herstellung der erfindungsgemäßen Polymermischungen kann auch aus Lösung geeigneter Lösungsmittel erfolgen.

Aus den erfindungsgemäßen Polymermischungen lassen sich z. B. durch Spritzguß oder Extrusion Formkörper mit einer guten Phasenanbindung herstellen. Diese weisen eine sehr gute Wärmeformbeständigkeit in Kombination mit einer sehr guten Zähigkeit sowie verbesserte Spannungsrißbeständigkeit und Bindenahtfestigkeit auf. Insbesondere zeigen derartige Formkörper eine überaus große Deformationsfähigkeit, bevor der duktile Bruch erfolgt.

Infolge dieses Eigenschaftsspektrums eignen sich die aus den erfindungsgemäßen Polymermischungen herstellbaren Formkörper besonders für Anwendungen im z.B. Automobilbau, Haushaltsbereich, sonstige Bauteile (Gehäuse).

Beispiele

I. Herstellung des A-B-C Blockpfropfcopolymeren

1. Reinigung der Monomeren:

Alle Arbeitsschritte wurden unter Stickstoff ausgeführt.

Styrol:

Die Reinigung von Styrol erfolgte durch Vortrocknen über fein gepulvertem Calciumhydrid. Zur Feinreinigung wurde das Styrol an einer Hochvakuumlinie entgast und umkondensiert. Vor dem Einkondensieren in die Monomerbürette wurden 100 g Styrol mit Dibutylmagnesium versetzt und drei Stunden gerührt.

Butadien:

In einem üblichen Druckgefäß wurden je 100 g Butadien und 10 ml einer 0.5 molaren Lösung von Dibutylmagnesium in Heptan vorgelegt. Das Lösungsmittel wurde im Vakuum entfernt. Das Butadien wurde aus der Vorratsflasche einkondensiert und mindestens drei Stunden bei Raumtemperatur gerührt.

2. Reinigung des Lösungsmittels:

Tetrahydrofuran technischer Qualität wurde über 6 Stunden mit fein gepulvertem Calciumhydrid unter Rückfluß gehalten.
Danach wurde in eine zweite Destillationsapparatur abdestilliert. Das THF wurde solange mit Kalium am Rückfluß erhitzt, bis die notwendige Reinheit erreicht war. Kriterium war dabei die sofortige Bildung des roten Anions des 1,1-Diphenylethylens bei Zugabe von Butyllithium zu einer Probe des THF, die mit wenig 1,1-Diphenylethylen versetzt wurde.

3. Anionische Polymerisation der A-B-Pfropfgrundlage

1244 g (= 11,95 Mol) Styrol wurden in 6 1 Cyclohexan als Lösungsmittel vorgelegt. Die berechnete Menge Initiator 12 ml (sekundäres Butyllithium: 1,5 M) wurde zugegeben, wodurch die anionische Polymerisation des Styrolmonomeren gestartet wurde, erkennbar an der stattfindenden exothermen Reaktion - die eine leichte Temperaturerhöhung bewirkt - und der orangeroten Farbe des entstehenden Styrolanions. Nach ca. 20 min. wurde eine kleine Probe der Lösung zur Molekulargewichtsbestimmung des Polystyrolblocks abgetrennt und in Methanol gefällt. Anschließend wurden 622 g Butadien in das Reaktionsgemisch zugegeben und 5 Stunden weitergerührt. Das Butadien reagiert unter diesen Bedingungen quantitativ ab. Anschließend wurde die Polymerisation durch Zugabe von Isopropanol abgebrochen.

Das Styrol-Butadien-Zweiblockcopolymer wies einen Styrolgehalt von 66,5 Gew.-%, ein Gewichtsmittel des Molekulargewichts von 103 000 bei einer Polydispersität von 1,06 auf (beide Werte wurden gegen Polystyrol-Eichstandards mittels GPC bestimmt). Nach $^{1}$H-NMR Analyse lagen 9 Mol-% der Butadien-Einheiten in 1,2- und 91 mol-% in 1,4-Verknüpfung vor.

4. Radikalische Pfropfung

Die Blockpfropfcopolymeren (nachfolgend als BPC bezeichnet) wurden durch radikalische, mit Dibenzoylperoxid (DBPO) initiierte Pfropfung von Cyclohexylmethacrylat (CHMA) bzw. Methylmethacrylat (MMA) in 2 1 Toluol bei 75°C synthetisiert. Vorgelegt wurden jeweils 215 g Styrol-Butadien-Blockcopolymer. In der Tabelle 1 sind die genauen Einwaagen und Bedingungen aufgeführt.

Tabelle 1:

| Blockpfropfcopolymere auf Basis von Styrol-Butadien-Zweiblockcopolymeren | | | | | | |
|---|---|---|---|---|---|---|
| | Monomer [g] | DBPO [g] | Reaktionszeit [h] | Monomerumsatz [%] | PB-Gehalt [Gew.-%] | π*) |
| BPC 1 | CHMA 990 | 1,68 | 8 | 63,7 | 8,9 | 2,9 |
| BPC 2 | CHMA 631<br>MMA 323 | 3,0 | 2 | 38,4 | 14,9 | 1,7 |
| BPC 3 | MMA 589 | 1,68 | 14 | 65,7 | 12,0 | 1,8 |
| BPC 4 | MMA 295 | 0,84 | 8 | 48,4 | 20,6 | 1,7 |
| BPC 5 | MMA 148 | 0,42 | 8 | 51,2 | 25,5 | 1,3 |

*) π = Masse des gebildeten Polymeren/Einwaage PS-b-PB

II. Herstellung der mehrphasigen Polymermischungen

Es wurden folgende Komponenten eingesetzt:

Komponente A1: Polystyrol mit einem Molekulargewicht von $M_w$ = 329000 (GPC gegen Polystyrol-Eichstandards) und $M_w/M_n$ = 2,0 und einem Schmelzindex MVI nach DIN 53 735 von 25,3 ml/10 min.

Komponente A2: Poly(2,6-dimethyl-1,4-phenylenether) mit einer reduzierten Viskosität von 0,56 (gemessen als 1 gew.-%ige Lösung in Chloroform bei 30°C gemäß DIN 53 728).

Komponente B1: Das Blockpfropfcopolymer BCP1 gemäß Tabelle 1

Komponente B2: Das Blockpfropfcopolymer BCP4 gemäß Tabelle 1

Komponente C1: Polyvinylchlorid (Vestolit® 6554 der Fa. Hüls) mit einem Molekulargewicht von $M_w$ = 115000 (GPC gegen Polystyrol-Eichstandards) und $M_w/M_n$ = 2,1 und einem Schmelzindex MVI nach DIN 53 735 von 0,68 ml/10 min gemessen bei 195°C.

Komponente C2: Ein durch kontinuierliche Lösungspolymerisation erhaltenes Copolymerisat aus Styrol und Acrylnitril im Gewichtsverhältnis 80/20 (VZ = 83 ml/g, gemessen nach DIN 53 727 als 0,5 gew.-%ige Lösung in DMF bei 23°C).

Herstellung der Polymermischungen

Die Polymermischungen wurden gemäß den in Tabelle 2 angegebenen Mengenverhältnissen auf einem Zweiwellenextruder (ZSK 30, Fa. Werner & Pfleiderer) mit einem Durchsatz von 20 kg/h und 200 U/min konfektioniert. Im Falle der PPE/SAN-Blends lag die Verarbeitungstemperatur bei 280°C, die PS/PVC-Blends wurden bei 200°C hergestellt. Die Produkte wurden extrudiert, durch ein Wasserbad geleitet, granuliert, getrocknet und zu den entsprechenden Probekörpern verspritzt. Die Bestimmung der Schlagzähigkeit und Kerbschlagzähigkeit erfolgte gemäß DIN 53 453.

Die Zusammensetzungen der Polymermischungen und die Ergebnisse der Messungen sind der Tabelle 2 zu entnehmen.

Tabelle 2:

| Beispiel | Komp. A [Gew.-%] | Komp. C [Gew.-%] | Komp. B [Gew.-%] | $a_M$ [kJ/m$^2$] | $a_K$ [kJ/m$^2$] |
|---|---|---|---|---|---|
| 1* | A1 50 | C1 50 | - | 2 | <<1 |
| 2 | A1 40 | C1 40 | B1 20 | 29 | 3,2 |
| 3 | A1 40 | C1 40 | B1 20 | 41 | 3,8 |
| 4* | A2 40 | C2 60 | - | 12 | 1 |
| 5 | A2 30 | C2 50 | B2 20 | 68 | 4,7 |
| 6 | A2 30 | C2 50 | B2 20 | 87 | 5,3 |

*) zum Vergleich

**Patentansprüche**

**1.** Mehrphasige Polymermischungen, enthaltend

a) 10 bis 89 Gew.-% an Polyphenylenether als Polymer (A),

b) 1 bis 40 Gew.-% an mindestens einem A-B-C Blockpfropfcopolymer (B), aufgebaut aus einem Block A, einem elastischen Block B, welcher als aufgepfropfte Seitenkette einen Block C, aufgebaut aus Methylmethacrylat, Methylacrylat, 2-Ethylhexylacrylat oder n-Butylacrylat oder deren Mischungen, enthält, wobei die Blöcke A, B und C jeweils voneinander verschieden sind,

c) 10 bis 89 Gew.-% an mindestens einem ASA-, ABS- oder SAN-Polymerisat oder Polymere aus $C_1$- bis $C_{18}$-Alkylestern der (Meth)acrylsäure oder Mischungen derartiger Polymere als Polymer (C),
wobei das Polymer (A) mit dem Block A verträglich und mit dem Block C unverträglich ist, das Polymer C mit dem Polymer Block C verträglich und mit dem Block A unverträglich ist, der elastische Block B eine Glasübergangstemperatur unterhalb +20°C aufweist und die Blöcke A, B und C miteinander unverträglich sind,

d) sowie 0 bis 60 Gew.-% an üblichen Zusatzstoffen und Verarbeitungshilfsmitteln,

**2.** Mehrphasige Polymermischungen nach Anspruch 1, wobei der elastische Block B eine Glastemperatur unterhalb von 0°C aufweist.

**3.** Mehrphasige Polymermischungen nach den Ansprüchen 1 oder 2, wobei der elastische Block B aus einem Polymer eines konjugierten Diens aufgebaut ist.

**4.** Mehrphasige Polymermischungen nach den Ansprüchen 1 bis 3, in denen das A-B-C-Blockpfropfcopolymer (B) durch sequentielle anionische Polymerisation der Blöcke A und B erhältlich ist und anschließend der Block C mittels radikalischer Pfropfpolymerisation auf den Block B erhältlich ist.

**5.** Mehrphasige Polymermischungen nach den Ansprüchen 1 bis 4, in denen der Block A des A-B-C-Blockpfropfcopolymeren als vinylaromatisches Polymer Polystyrol enthält.

**6.** Mehrphasige Polymermischungen nach den Ansprüchen 1 bis 5, in denen der Block B des A-B-C-Blockpfropfcopolmyeren aus Polybutadien oder Polyisopren aufgebaut ist.

**7.** Verwendung der mehrphasigen Polymermischungen gemäß den Ansprüchen 1 bis 6 zur Herstellung von Folien, Fasern und Formkörpern.

**8.** Formkörper, erhältlich aus den mehrphasigen Polymermischungen gemäß den Ansprüchen 1 bis 6.

## Claims

1. A multiphase polymer blend containing

   a) from 10 to 89% by weight of polyphenylene ether as polymer (A),

   b) from 1 to 40% by weight of at least one A-B-C block graft copolymer (B) composed of a block A and a resilient block B which contains a block C composed of methyl methacrylate, methyl acrylate, 2-ethylhexyl acrylate or n-butyl acrylate or a mixture thereof as a grafted-on side chain, the blocks A, B and C differing from one another,

   c) from 10 to 89% by weight of at least one ASA, ABS or SAN polymer or polymers of $C_1$-$C_{18}$-alkyl esters of (meth)acrylic acid or mixtures of such polymers as polymer (C),
   wherein the polymer (A) is compatible with the block A and incompatible with the block C, the polymer (C) is compatible with the polymer block C and incompatible with the block A, the resilient block B has a glass transition temperature below +20°C and the blocks A, B and C are incompatible with one another,

   d) and from 0 to 60% by weight of conventional additives and processing assistants.

2. A multiphase polymer blend as claimed in claim 1, wherein the resilient block B has a glass transition temperature above 0°C.

3. A multiphase polymer blend as claimed in claim 1 or 2, wherein the resilient block B is composed of a polymer of a conjugated diene.

4. A multiphase polymer blend as claimed in any of claims 1 to 3, wherein the A-B-C block graft copolymer (B) is obtainable by sequential anionic polymerization of the blocks A and B and the block C is subsequently obtainable by means of free radical graft polymerization onto the block B.

5. A multiphase polymer blend as claimed in any of claims 1 to 4, wherein the block A of the A-B-C block graft copolymer contains polystyrene as vinylaromatic polymer.

6. A multiphase polymer blend as claimed in any of claims 1 to 5, wherein the block B of the A-B-C block graft copolymer is composed of polybutadiene or polyisoprene.

7. Use of a multiphase polymer blend as claimed in any of claims 1 to 6 for the production of films, fibers and moldings.

8. A molding obtainable from a multiphase polymer blend as claimed in any of claims 1 to 6.

## Revendications

1. Mélanges de polymères multiphases, contenant

   a) 10 à 89% en poids de poly(éther de phénylène) en tant que composant A),
   b) 1 à 40% en poids d'au moins un copolymère bloc de greffage A-B-C (B), constitué d'un bloc A, un bloc élastique B, contenant comme chaîne latérale copolymérisée un bloc C constitué de méthacrylate de méthyle, acrylate de méthyle, acrylate de 2-éthylhexyle ou acrylate de n-butyle, ou leurs mélanges, les blocs A, B et C étant à chaque fois différents les uns des autres,
   c) 10 à 89% en poids d'au moins un polymère ASA, ABS ou SAN, ou de polymères à base d'alkylesters en $C_1$ à $C_{18}$ d'acide (méth)acrylique, ou de mélanges de ces polymères en tant que polymère (C),
   où le polymère (A) est compatible avec le bloc A et incompatible avec le bloc C, le polymère C est compatible avec le bloc de polymère C et incompatible avec le bloc A, le bloc élastique B présente une température de transition vitreuse inférieure à +20°C et les blocs A, B et C sont incompatibles entre eux,
   d) ainsi que 0 à 60% en poids d'additifs et adjuvants de traitement courants.

2. Mélanges de polymères multiphases selon la revendication 1, où le bloc élastique B présente une température de transition vitreuse inférieure à 0°C.

3. Mélanges de polymères multiphases selon la revendication 1 ou 2, où le bloc élastique B est constitué d'un polymère d'un diène conjugué.

4. Mélanges de polymères multiphases selon les revendications 1 à 3, où le copolymère bloc de greffage A-B-C (B) peut être obtenu par polymérisation anionique séquentielle des blocs A et B et ensuite le bloc C peut être obtenu par polymérisation radicalaire de greffage sur le bloc B.

5. Mélanges de polymères multiphases selon les revendications 1 à 4, où le bloc A du copolymère bloc de greffage A-B-C contient comme polystyrène un copolymère vinylaromatique.

6. Mélanges de polymères multiphases selon les revendications 1 à 5, où le bloc B du copolymère de greffage A-B-C est constitué de polybutadiène ou de polyisoprène.

7. Utilisation des mélanges de polymères multiphases selon les revendications 1 à 6 pour la production de feuilles, fibres et corps façonnés.

8. Corps façonnés que l'on peut obtenir à partir des mélanges de polymères multiphases selon les revendications 1 à 6.